# EUROPEAN PATENT APPLICATION

(11) **EP 4 576 411 A1**
(43) Date of publication of application: **25.06.2025**
(21) Application number: 24860039.7
(22) Date of filing: 23.04.2024
(51) Int. Cl.: H01M 50/591, H01M 50/588, H01M 50/502, H01M 50/517, H01M 50/249

(54) **BATTERY PACK AND VEHICLE INCLUDING SAME**

(30) Priority: 25.08.2023 KR 20230112309
(71) Applicant: LG Energy Solution, Ltd., Seoul 07335 (KR)
(72) Inventor: LEE, Gi-Hwan, Daejeon 34122 (KR); KIM, Ki-Young, Daejeon 34122 (KR); KIM, Dae-Gil, Daejeon 34122 (KR); HWANG, Sung-Tack, Daejeon 34122 (KR)
(74) Representative: Plasseraud IP
(86) International application number: PCT/KR2024/005464
(87) International publication number: WO 2025/048112

(57) **Abstract**

A battery pack according to the present disclosure includes a plurality of battery modules arranged along a width direction or a length direction; a pack case accommodating the plurality of battery modules; a plurality of inter-busbars electrically connecting two adjacent battery modules among the plurality of battery modules; and a shielding unit configured to shield the inter-busbar from an internal space of the pack case, wherein the shielding unit is disposed on an outer surface of the inter-busbar, between any one inter-busbar and another inter-busbar and between the internal space and the inter-busbar.

## Description

### TECHNICAL FIELD

The present disclosure relates to a battery pack, and more particularly, to a battery pack for preventing arcing or short circuiting on the outer surface of an inter-busbar due to flames or high temperature impurities in the event of fire in a battery module. The present application claims priority to Korean Patent Application No. 10-2023-0112309 filed on August 25, 2023 in the Republic of Korea, the disclosure of which is incorporated herein by reference.

### BACKGROUND

As opposed to primary batteries that cannot be used again after they are used once, secondary batteries convert electrical energy to chemical energy, is recharged and can be used semi-permanently.

In particular, lithium ion secondary batteries have high energy storage density, light weight, compact size, high safety, low discharge rate and long life, and due to these advantages, they are being widely used as electric car batteries in recent years. For reference, lithium ion secondary batteries are generally classified into cylindrical, prismatic and pouch type according to the shape, and have a wide range of applications including electric cars as well as energy storage systems (ESS) and other electric devices.

Currently, a lithium ion secondary battery cell has an operating voltage of about 2.5V to 4.5V. Accordingly, to use secondary batteries as an energy source of electric vehicles, a plurality of lithium ion secondary battery cells is connected in series and/or in parallel to form a battery module, and a plurality of battery modules is connected in series and/or in parallel to form a battery pack.

Since secondary batteries involve chemical reactions during charging and discharging, when they are used in higher temperature environments than the optimal temperature, performance degradation may occur, and in the case where thermal control to the optimal temperature fails, there are unexpected fire or explosion risks. Moreover, the battery pack including the plurality of secondary batteries has a structure in which the secondary batteries are densely packed in a pack case, and thus may be susceptible to a thermal event.

When a thermal event such as overheating or thermal runaway occurs in a specific battery module, flames or high temperature impurities may be released into the pack case. Moreover, since an inter-busbar electrically connecting battery modules is exposed to the internal space, when flames or impurities contact the inter-busbar, arcing or short circuiting may occur, and thermal energy may accumulate faster, causing thermal propagation to adjacent battery modules or accelerated thermal runaway propagation in battery modules.

Accordingly, there is an urgent need for an improved structure for shielding the inter-busbar from the internal space of the pack case to prevent arcing or short circuiting in the inter-busbar in the event of fire in the battery module.

### DISCLOSURE

### Technical Problem

The present disclosure is designed to solve the above-described problem, and therefore the present disclosure is directed to providing a battery pack in which an inter-busbar connecting battery modules is completely shielded inside a pack case to prevent arcing or short circuiting on the outer surface of the inter-busbar in the event of fire in the battery module and minimize thermal energy accumulation, and delay thermal propagation to the adjacent battery module.

The technical problems to be solved by the present disclosure are not limited to the aforementioned problems, and these and other problems will be clearly understood by those skilled in the art from the following description.

### Technical Solution

To solve the above-described problem, a battery pack according to the present disclosure includes a plurality of battery modules arranged along a width direction or a length direction; a pack case accommodating the plurality of battery modules; a plurality of inter-busbars electrically connecting two adjacent battery modules among the plurality of battery modules; and a shielding unit configured to shield the inter-busbar from an internal space of the pack case, wherein the shielding unit is disposed on an outer surface of the inter-busbar, between any one inter-busbar and another inter-busbar and between the internal space and the inter-busbar.

The inter-busbar may connect two battery modules located adjacent to each other in the width direction among the plurality of battery modules, and the shielding unit may be extended in the width direction and disposed at a gap between the two battery modules located adjacent to each other in the length direction.

The shielding unit may block a top or side exposure of the inter-busbar to prevent flames or solid ejected materials produced in the internal space from coming into contact with the outer surface of the inter-busbar in case of a thermal event.

The shielding unit may include a first shield disposed corresponding to the outer surface of the inter-busbar; and a second shield configured to separate any one inter-busbar from another inter-busbar located adjacent to the inter-busbar in the length direction.

The first shield may include a fire resistant member disposed in contact with the inter-busbar and surrounding a part of the inter-busbar; and an accommodation case accommodating the inter-busbar.

The fire resistant member may include a mica tape or a glass tape.

The accommodation case may be made of a heat resistant plastic material.

The accommodation case may include a lower accommodation casing accommodating the inter-busbar; and an upper accommodation cover disposed on the lower accommodation casing and coupled to the lower accommodation casing.

The lower accommodation casing may include a sidewall frame having a height corresponding to a thickness of the inter-busbar; and a support plate disposed on bottom of the sidewall frame, and configured to mount and support the inter-busbar at a center, and the support plate may have an open surface on two sides.

The sidewall frame may have a coupling hook protruded upward to be coupled to the upper accommodation cover, and the upper accommodation cover may have a coupling groove to which the coupling hook is detachably coupled.

The second shield may include a cover portion attached to a part of the outer surface of the battery module and configured to cover the inter-busbar; and a shielding member in contact with the cover portion and disposed on top of the two battery modules located adjacent to each other in the length direction to block the gap.

The cover portion may be bent to cover an edge of the battery module.

The cover portion may include a first cover member configured to cover an upper surface of the inter-busbar; and a second cover member disposed perpendicularly from the first cover member and configured to cover a side of the inter-busbar, a length and width of the first cover member may be larger than a length and width of the inter-busbar in the length direction, a length of the second cover member may be equal to a length of the first cover member and a width of the second cover member may be larger than a thickness of the inter-busbar.

The shielding member may be formed in a flat plate shape and disposed to connect upper surfaces of the two battery modules located adjacent to each other in the length direction.

A length of the shielding member may be larger than a length of the cover portion.

The shielding member may be continuously extended in the width direction of the battery module.

A width of the shielding member may be larger than a sum of a width of the first cover member disposed in the two battery modules located adjacent to each other in the length direction and the gap between the two battery modules located adjacent to each other in the length direction.

The second shield may be made of mica.

The first shield and the cover portion may prevent the flames or solid ejected materials released from a front side of any one battery module from coming into contact with the inter-busbar of another battery module located adjacent to the battery module in the length direction.

The inter-busbar may have a fastening hole for coupling with the battery module on two sides, a fastening bolt may be disposed at the fastening hole, and the accommodation case may shield an outer surface of the fastening bolt.

Additionally, according to the present disclosure, there is provided a vehicle including the battery pack.

### Advantageous Effects

According to an aspect of the present disclosure, through the shielding unit configured to shield the internal space of the pack case, the inter-busbar connecting battery modules may be completely shielded inside the pack case, thereby preventing arcing or short circuiting on the outer surface of the inter-busbar due to flames or high temperature impurities released into the pack case when a thermal event occurs, reducing thermal energy accumulation and delaying thermal propagation to the adjacent battery module.

Additionally, it may be possible to prevent the fire spread between battery modules, thereby enhancing durability of the battery pack and reducing the maintenance and repair cost.

Additionally, with the relatively simple shield structure, it may be possible to prevent short circuiting between battery modules and prevent explosive fire spread in the battery module in the event of fire in the pack, thereby suppressing notorious accumulation of thermal energy in the battery pack, and preventing structural collapse of the battery pack.

The effects of the present disclosure are not limited to the aforementioned effects, and these and other effects will be clearly understood by those skilled in the art from the specification and the accompanying drawings.

### BRIEF DESCRIPTION OF THE DRAWINGS

The accompanying drawings illustrate exemplary embodiments of the present disclosure and together with the following detailed description, serve to provide a better understanding of the technical aspect of the present disclosure, and the present disclosure should not be construed as being limited to the drawings.
FIG. 1 is a schematic perspective view of a battery pack according to an embodiment of the present disclosure.
FIG. 2 is an exploded perspective view of the main components of the battery pack of FIG. 1.
FIG. 3 is a diagram illustrating a shielding unit in a battery pack according to an embodiment of the present disclosure.
FIG. 4 is a diagram schematically showing a first shield of the shielding unit in FIG. 2.
FIG. 5 is a schematic perspective view of a shielding unit according to an embodiment of the present disclosure.
FIG. 6 is an exploded perspective view of a first shield in a shielding unit of a battery pack according to an embodiment of the present disclosure.
FIGs. 7 and 8 are diagrams illustrating a shielding unit in a battery pack according to an embodiment of the present disclosure.
FIGs. 9 and 10 are perspective views schematically showing a process of coupling a shielding unit in a battery pack according to an embodiment of the present disclosure.
FIGs. 11 and 12 are diagrams schematically showing a shielding unit in a coupled state in a battery pack according to an embodiment of the present disclosure.
FIG. 13 is a diagram illustrating a vehicle according to an embodiment of the present disclosure.

### BEST MODE

Hereinafter, exemplary embodiments of the present disclosure will be described in detail with reference to the accompanying drawings. Prior to the description, it should be understood that the terms or words used in the specification and the appended claims should not be construed as limited to general and dictionary meanings, but rather interpreted based on the meanings and concepts corresponding to the technical aspect of the present disclosure on the basis of the principle that the inventor is allowed to define terms appropriately for the best explanation..

Therefore, the embodiments described herein and illustrations in the accompanying drawings are provided by way of illustration but not intended to be limiting, and thus it should be understood that a variety of other equivalents and modifications could have been made at the time the application was filed.

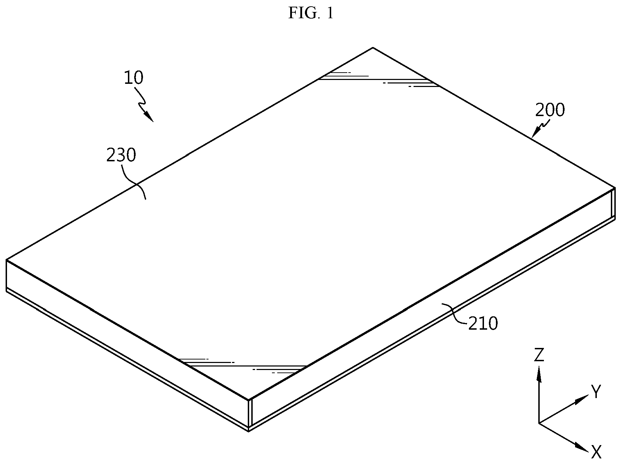

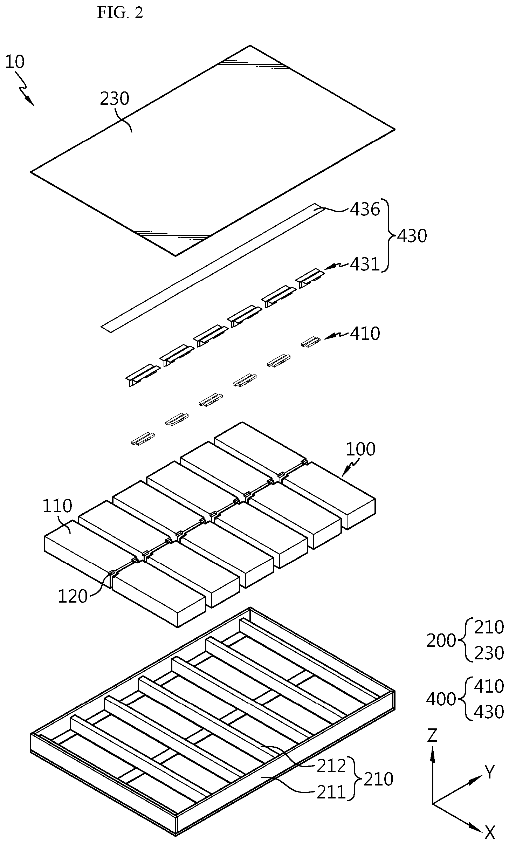

FIG. 1 is a schematic perspective view of a battery pack according to an embodiment of the present disclosure, and FIG. 2 is an exploded perspective view of the main components of the battery pack of FIG. 1.

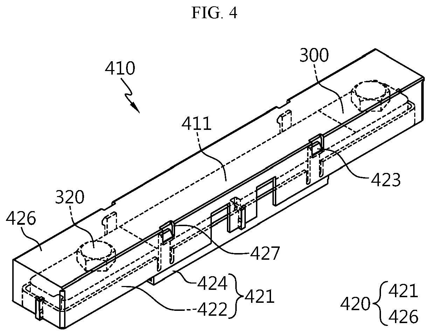

Referring to FIGs. 1 and 2, the battery pack 10 according to this embodiment may include a plurality of battery modules 100 arranged along a width direction or a length direction, a pack case 200 accommodating the plurality of battery modules 100, a plurality of inter-busbars 300 (see FIG. 4) electrically connecting two adjacent battery modules 100, and a shielding unit 400 to shield the inter-busbars 300 from the internal space of the pack case 200.

The battery module 100 may include a plurality of battery cells (not shown). The battery cell refers to a secondary battery including an electrode assembly, an electrolyte and a pouch case accommodating the electrode assembly, and in this embodiment, the battery cell is a pouch-type battery cell that has high energy density and is easy to stack, but a cylindrical or prismatic secondary battery may be applied as the battery cell.

The pouch-type battery cell may include a pair of electrode leads (not shown) that are connected to the electrode assembly and extended in the outward direction of the pouch case and act as an electrode terminal. The pair of electrode leads may be extended frontward and rearward along the length direction. Alternatively, the pair of electrode leads may be extended from two ends of the battery cell, i.e., in the length direction (±X direction). If necessary, the electrode leads may be only disposed at an end in X axis direction, for example, an end in -X axis direction. Although not shown, electrical components, for example, a busbar, a busbar frame and a module connector may be mounted adjacent to the pair of electrode leads of the battery cell.

Additionally, the battery module 100 may include a module case 110 accommodating the battery cells. The module case 110 may be configured to receive at least one battery cell therein, and be made of a material having high stiffness and durability to physically or chemically protect the battery cell received therein, for example, a metal material or a plastic material such as ABS resin.

A terminal 120 of the battery module 100 may be present at a front or rear side (two sides in X axis direction) of the module case 110. The terminal 120 may be either positive or negative. The terminal 120 may be disposed on one side of the battery module 100, and in some cases, may be disposed on two sides of the battery module 100. The terminal 120may be connected to the inter-busbar 300.

The pack case 200 may accommodate the plurality of battery modules 100. To this end, the pack case 200 may have an accommodation space in which the plurality of battery modules 100 is received. Referring primarily to FIG. 2, the battery modules 100 may be arranged along the width direction (Y axis direction) and the length direction (X axis direction) in the accommodation space of the pack case 200.

The pack case 200 may include a pack tray 210 in which the plurality of battery modules 100 is received and a pack cover 230 disposed on the pack tray 210. The pack tray 210 has an open top and is coupled to the pack cover 230. The pack tray 210 may be made of a material having high mechanical strength to protect the battery modules 100 from external impacts.

The pack tray 210 may include a tray body 211 and a plurality of partitions 212. The tray body 211 includes a bottom surface and an edge frame of the pack tray 210, and the battery module 100 may be mounted and supported on the bottom surface of the tray body 211. The plurality of partitions 212 may be disposed inside the edge frame of the tray body 211, and arranged at a regular interval along the width direction (Y axis direction) of the pack tray 210. Accordingly, the partitions 212 may separate the battery modules 100 arranged along the width direction (Y axis direction).

The height (Z axis direction) of the partition 212 may be lower than the height of the battery module 100. Additionally, the height of the partition 212 may be lower than the height to which the terminal 120 of the battery module 100 is located. Accordingly, when the inter-busbar 300 is disposed between any one battery module 100 and its adjacent other battery module 100, the inter-busbar 300 may not interfere with the partition 212.

In this embodiment, six battery modules 100 may be arranged along the width direction, and the partition 212 between the battery modules 100 may be disposed for each battery module 100, totaling five partitions 212 along the width direction. When the six battery modules 100 form an array, another array may be disposed in parallel to the array, spaced a predetermined distance apart from each other in the length direction of the battery module 100, so the battery modules 100 may be disposed in 6 × 2 (the width direction × the length direction) arrangement, and likewise, five partitions 212 may be disposed in the second array. That is, as shown in the drawings, any one partition 212 may be continuous along the length direction (X axis direction) of the pack case 200. In contrast, the partition 212 may be cut at the center. The number of partitions 212 or the number of battery modules 100 in the pack tray 210 is not limited to this embodiment and may be differently set.

The pack cover 230 is disposed on the pack tray 210 to air-tightly seal the internal space in which the battery module 100 is received. In this embodiment, the pack cover 230 may be configured to completely cover the plurality of battery modules 100. The pack cover 230 may be made of aluminum or SUS to ensure stiffness and may be also made of a highly conductive material. Although not shown, a variety of coupling methods for sealing, for example, bolting, welding, adhesion and hooking may be used to couple the pack tray 210 to the pack cover 230.

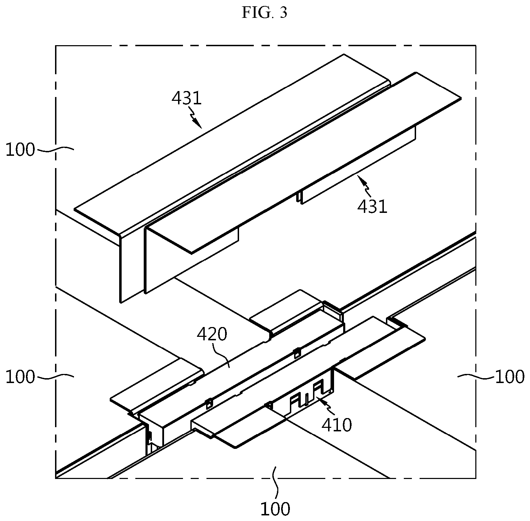

FIG. 3 is a diagram illustrating the shielding unit in the battery pack according to an embodiment of the present disclosure, and FIG. 4 is a diagram schematically showing a first shield of the shielding unit in FIG. 2.

Referring to FIGs. 3 and 4, the inter-busbar 300 electrically connects two adjacent battery modules 100 among the plurality of battery modules 100. The inter-busbar 300 may connect two battery modules 100 located adjacent to each other in the width direction among the plurality of battery modules 100. To this end, two ends of the inter-busbar 300 may be located at the terminal 120 of any one battery module 100 and the terminal 120 of the other battery module 100 located adjacent to the battery module 100 in the width direction in order to electrically connect the battery modules 100. The inter-busbar 300 may be made of copper.

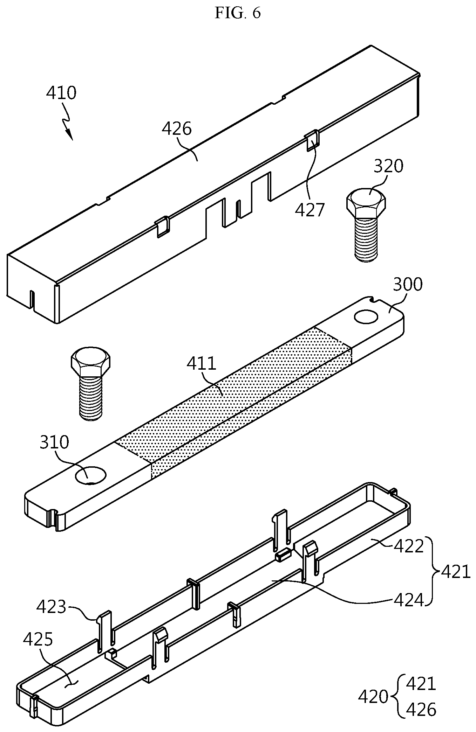

The inter-busbar 300 may have a fastening hole 310 (see FIG. 6) for coupling with the battery module 100 on two sides, and a fastening bolt 320 may be disposed at the fastening hole 310. Through the fastening bolt 320, the inter-busbar 300 may be fastened to the terminal 120 of the battery module 100. Although the inter-busbar 300 connecting the battery modules 100 in the width direction is shown, the inter-busbar 300 may be disposed in the length direction of the battery module 100 and electrically connect the battery modules 100 arranged in the length direction.

Referring back to FIG. 2, the shielding unit 400 may shield the inter-busbar 300 from the internal space of the pack case 200. That is, the shielding unit 400 may cover the inter-busbar 300 to prevent the exposure of the outer surface of the inter-busbar 300 to the internal space of the pack case 200.

To this end, the shielding unit 400 may be disposed on the outer surface of the inter-busbar 300, between any one inter-busbar 300 and the other inter-busbar 300 and between the internal space and the inter-busbar 300.

The shielding unit 400 may include a first shield 410 on the outer surface of the inter-busbar 300, and a second shield 430 that separates any one inter-busbar 300 from the other inter-busbar 300 located adjacent to the inter-busbar 300 in the length direction, as described below.

As shown in FIG. 4, the first shield 410 may cover the outer surface of the inter-busbar 300 to shield the inter-busbar 300 from the internal space of the pack case 200. The first shield 410 may be attached to the outer surface of the inter-busbar 300 to cover the outer surface of the inter-busbar 300, and may have a case that conforms to the shape of the outer surface of the inter-busbar 300 to receive the inter-busbar 300 therein, so the inter-busbar 300 may be separated from the internal space of the pack case 200.

The second shield 430 may intervene between any one inter-busbar 300 and the other inter-busbar 300. In particular, as shown in FIGs. 2 to 4, a cover portion 431 of the second shield 430 may be configured to separate the inter-busbar 300 of any one battery module 100 from the inter-busbar 300 of the other battery module 100 located adjacent to the battery module 100 in the length direction.

Additionally, the second shield 430 may intervene between the internal space and the inter-busbar 300 to shield the inter-busbar 300 from the internal space of the pack case 200. That is, a shielding member 436 of the second shield 430 may be disposed on top of the two battery modules 100 located adjacent to each other in the length direction and configured to separate the inter-busbar 300 from the internal space of the pack case 200. It may be possible to keep flames moving along the upper surface of the battery module 100 from moving to the inter-busbar 300. The shielding unit 400 will be described in detail below.

The shielding unit 400 may block the top or side exposure of the inter-busbar 300 from the internal space of the pack case 200 to prevent the contact between flames or solid ejected materials produced in the internal space and the outer surface of the inter-busbar 300 when a thermal event occurs. Accordingly, the inter-busbar 300 connecting the battery modules 100 may be completely blocked inside the pack case 200, thereby preventing arcing or short circuiting, reducing thermal energy accumulation and delaying thermal propagation to the adjacent battery module 100. The inter-busbar 300 that may be made of copper avoids the exposure to flames or solid ejected materials inside the pack case 200. As a result, it may be possible to solve the problems with the exposure of flames to the outside of the battery pack and accelerated thermal propagation due to arcing or short circuiting in the inter-busbar 300.

Hereinafter, the shielding unit 400 will be described in detail.

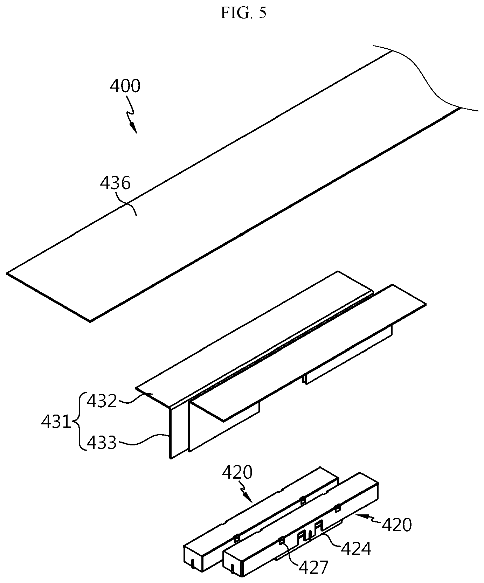

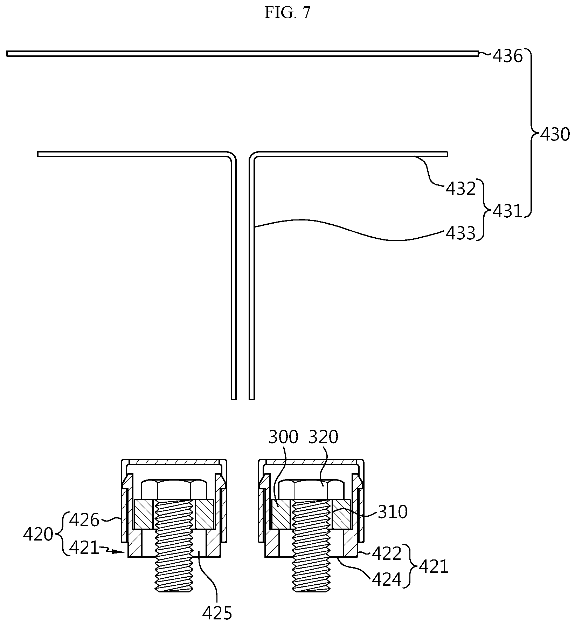

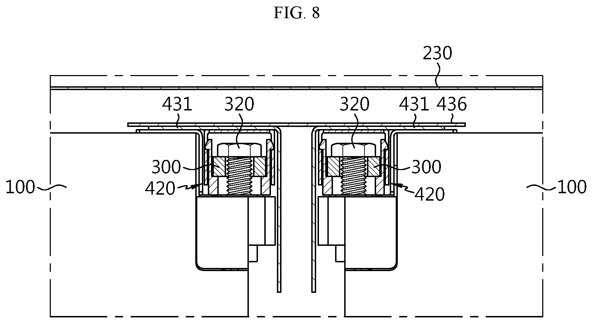

FIG. 5 is a schematic perspective of the shielding unit according to an embodiment of the present disclosure, FIG. 6 is an exploded perspective view of the first shield in the shielding unit of the battery pack according to an embodiment of the present disclosure, and FIGs. 7 and 8 are diagrams illustrating the shielding unit in the battery pack according to an embodiment of the present disclosure.

Referring to FIGs. 5 to 8, the shielding unit 400 may include the first shield 410 and the second shield 430.

The first shield 410 may be disposed corresponding to the outer surface of the inter-busbar 300 to block the exposure to the internal space of the pack case 200 of the inter-busbar 300.

Referring primarily to FIG. 6, the first shield 410 may include a fire resistant member 411 disposed in contact with the inter-busbar 300 and surrounding a part of the inter-busbar 300, and an accommodation case 420 accommodating the inter-busbar 300.

The fire resistant member 411 may be disposed in contact with the outer surface of the inter-busbar 300. The fire resistant member 411 may surround a part of the outer surface of the inter-busbar 300, and surround the outer surface of the central area except the fastening hole 310 on two sides of the inter-busbar 300. The fire resistant member 411 used may be a mica or glass tape. The fire resistant member 411 may directly cover the outer surface of the inter-busbar 300 to shield the inter-busbar 300. Additionally, when the mica or glass tape is used instead of an insulating material, high temperature tolerance time and temperature at the inter-busbar 300 increases through the fire resistant member 411.

The accommodation case 420 may accommodate the inter-busbar 300. The accommodation case 420 may completely accommodate the inter-busbar 300 to shield the inter-busbar 300 from the internal space of the pack case 200. The accommodation case 420 may include a lower accommodation casing 421 accommodating the inter-busbar 300, and an upper accommodation cover 426 disposed on the lower accommodation casing 421 and coupled to the lower accommodation casing 421.

The lower accommodation casing 421 may include a sidewall frame 422 having a height corresponding to a thickness of the inter-busbar 300, and a support plate 424 disposed on bottom of the sidewall frame 422, and configured to mount and support the inter-busbar 300 at the center. The sidewall frame 422 may have a coupling hook 423 protruded upward and coupled to the upper accommodation cover 426. The inter-busbar 300 may be mounted and supported on the upper surface of the support plate 424. The support plate 424 may have an open surface 425 on two sides. The terminal 120 of the battery module 100 may be disposed at the open surface 425.

The upper accommodation cover 426 may have an open bottom and completely cover the lower accommodation casing 421, and the upper accommodation cover 426 may have a coupling groove 427 to which the coupling hook 423 is detachably coupled.

The accommodation case 420 having the above-described configuration may completely accommodate the inter-busbar 300 to completely shield the inter-busbar 300 from the internal space of the pack case 200. In this instance, two end portions of the inter-busbar 300 may be disposed at the open surface 425 of the support plate 424 and provide a coupling area between the inter-busbar 300 and the terminal 120. In this instance, the fastening bolt 320 may be also disposed in the accommodation case 420 and shielded from the internal space of the pack case 200. In particular, the accommodation case 420 may cover the entire area of the inter-busbar 300 and shield the outer surface of the fastening bolt 320.

It may be possible to completely shield the outer surface of the inter-busbar 300 while minimizing the exposure at the connected part between the inter-busbar 300 and the battery module 100. The material of the accommodation case 420 may include a heat resistant plastic material. Any other material having heat resistance and insulation may be used.

Through the first shield 410 having the above-described configuration, the outer surface of the inter-busbar 300 may be shielded from the internal space of the pack case 200. Because the inter-busbar 300 avoids the exposure to the outside, it may be possible to prevent arcing or short circuiting more effectively.

Referring back to FIG. 5, the second shield 430 may separate any one inter-busbar 300 from the other inter-busbar 300 located adjacent to the inter-busbar 300 in the length direction. To this end, the second shield 430 may include the cover portion 431 attached to a part of the outer surface of the battery module 100 and configured to cover the inter-busbar 300, and the shielding member 436 in contact with the cover portion 431 and disposed on top of the two battery modules 100 located adjacent to each other in the length direction to block the gap.

Referring to FIGs. 3 and 7 together with FIG. 5, the cover portion 431 may be attached to the outer surface of the battery module 100, in particular, an edge. The cover portion 431 may be bent to cover the edge of the battery module 100. For example, the cover portion 431 may have an L-shaped cross section. The cover portion 431 may be placed on the battery module 100 and cover the top and side of the inter-busbar 300. The cover portion 431 may include a first cover member 432 covering the upper surface of the inter-busbar 300, and a second cover member 433 disposed perpendicularly from the first cover member 432 and covering the side of the inter-busbar 300.

Referring to FIG. 8, the first cover member 432 may be attached to the upper surface of the battery module 100 and be spaced a predetermined distance apart from the inter-busbar 300. The first cover member 432 may cover the upper side of the inter-busbar 300. The length and width of the first cover member 432 may be larger than the length and width of the inter-busbar 300 in the length direction to improve shielding efficiency.

The second cover member 433 may be bent perpendicularly from the first cover member 432 and attached to the side (or front side) of the battery module 100. The length of the second cover member 433 may be equal to the length of the first cover member 432 and the width of the second cover member 433 may be larger than the thickness of the inter-busbar 300.

Meanwhile, the shielding member 436 may be formed in a flat plate shape and disposed to connect the upper surfaces of the two battery modules 100 located adjacent to each other in the length direction. The size of the shielding member 436 may be larger than the size of the cover portion 431, and specifically, the length of the shielding member 436 may be larger than the length of the cover portion 431. In this embodiment, the shielding member 436 may be continuously disposed in the width direction of the battery module 100 as shown in FIG. 5.

In a variation, the shielding member is not continuously extended, and may be split into a plurality of shielding members which are connected to each other. In this case, the split shielding members may be arranged along the width direction of the battery module 100. A cutting line may be formed between the plurality of shielding members.

Additionally, the width of the shielding member 436 may be larger than the sum of the width of the first cover member 432 disposed at the two battery modules 100 located adjacent to each other in the length direction and the gap between the two battery modules 100 located adjacent to each other in the length direction.

Accordingly, the second shield 430 including the cover portion 431 and the shielding member 436 may form a secondary shield structure that shields the inter-busbar 300 from the internal space. The second shield 430 having the above-described configuration may be made of mica. In this embodiment, a rigid mica material may be used, and may be a material having higher mechanical properties against warpage or sags in the plate-shaped structure. Here, the rigid mica material may be a more rigid material than soft or flexible mica or tape in a relative concept.

By this exemplary configuration, when flames or high temperature impurities are released into the pack case 200 in case of the thermal event, the inter-busbar 300 connecting the battery modules 100 may be completely shielded inside the pack case 200, thereby preventing arcing or short circuiting and reducing thermal energy accumulation. Furthermore, thermal propagation to the adjacent battery module 100 may be delayed or prevented, contributing to thermal propagation (TP) suppression.

Additionally, it may be possible to prevent fire propagation between the battery modules 100, thereby enhancing durability of the battery pack 10 and reducing the maintenance and repair cost. Additionally, with the simpler shield structure, it may be possible to prevent explosive fire propagation in the battery module 100 due to an electrical short circuit, thereby preventing structural collapse of the battery pack 10.

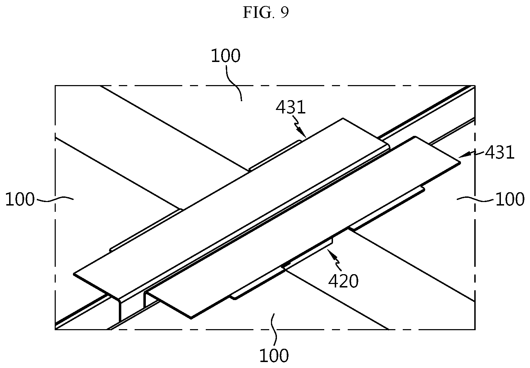

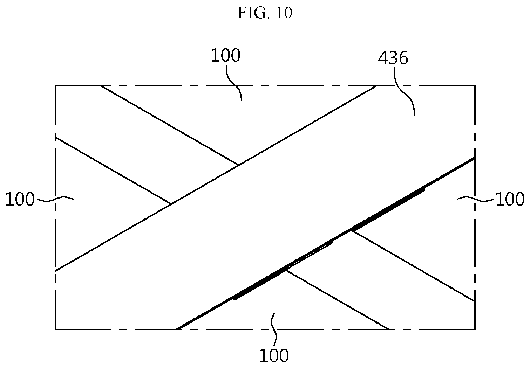

FIGs. 9 and 10 are perspective views schematically showing a process of coupling the shielding unit in the battery pack according to an embodiment of the present disclosure

Hereinafter, the process of coupling the shielding unit 400 in the battery pack 10 according to this embodiment will be described in detail with reference to FIGs. 6 and 8 to 10.

First, as shown in FIG. 6, the fire resistant member 411 is attached to the inter-busbar 300. The mica or glass tape is attached to the outer surface of the inter-busbar 300.

Subsequently, before connecting the inter-busbar 300 between the battery modules 100, the accommodation case 420 is disposed at the location at which the inter-busbar 300 is connected. The lower accommodation casing 421 is disposed on the two terminals 120 of the pair of battery modules 100, the inter-busbar 300 is mounted on the support plate 424, and the battery module 100 and the inter-busbar 300 are connected through the fastening bolt 320 in the fastening hole 310. Subsequently, when the inter-busbar 300 is received in the lower accommodation casing 421, the upper accommodation cover 426 is coupled, completing the assembly of the accommodation case 420. Through this process, the first shield 410 may be placed. The first shield 410 may cover the entire outer surface of the inter-busbar 300 and the fastening part including the terminal 120 of the battery module 100 and the fastening bolt 320.

Subsequently, the cover portion 431 as in FIG. 3, may be attached to the edge of the battery module 100 as shown in FIG. 9. That is, the first cover member 432 is attached to the upper surface of the battery module 100, and the second cover member 433 is attached to the front side of the battery module 100. As shown in FIG. 8, the length and width of the first cover member 432 and the length and width of the second cover member 433 may be larger than the length or thickness of the inter-busbar 300 to improve shielding efficiency

Subsequently, as shown in FIG. 10, the shielding member 436 is disposed on top of the two battery modules 100 located adjacent to each other in the length direction. The shielding member 436 has a flat plate shape and connects the upper surfaces of the two battery modules 100 located adjacent to each other in the length direction. Additionally, the shielding member 436 is continuously extended in the width direction of the battery module 100.

Hereinafter, the shielding process will be described.

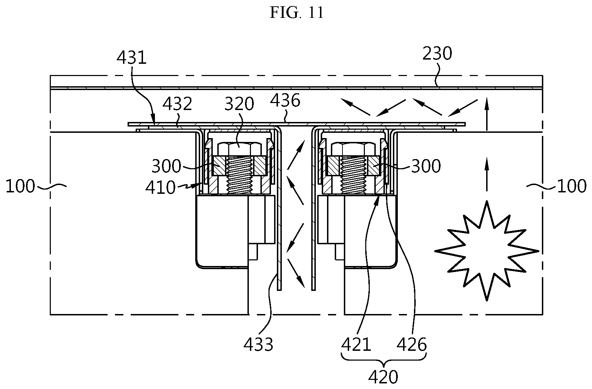

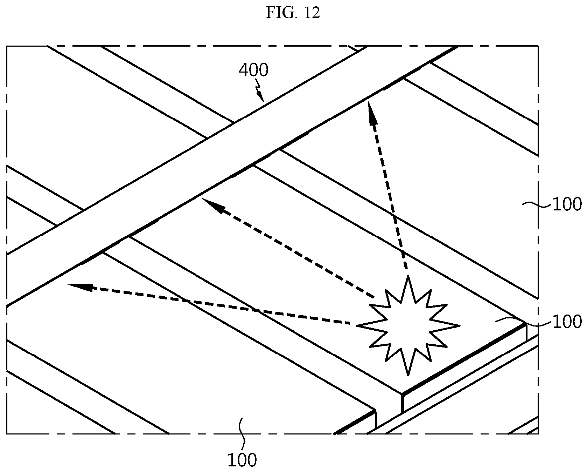

FIGs. 11 and 12 are diagrams schematically showing the shielding unit in the coupled state in the battery pack according to an embodiment of the present disclosure.

Referring to FIGs. 11 and 12 together with FIGs. 6 to 8, when a thermal event occurs in any one battery module 100 (see the side battery module 100 in FIG. 11), flames or many ejected materials may be released along the front side (in FIG. 11, the central area between the battery modules 100) and the upper surface of the battery module 100.

In this instance, first, the first shield 410 shields the outer surface of the inter-busbar 300. That is, the fire resistant member 411 (see FIG. 6) attached to the outer surface of the inter-busbar 300 prevents the contact with the flames or ejected materials. Additionally, the accommodation case 420 prevents the exposure of the outer surface of the inter-busbar 300, and prevents the contact with flames or ejected materials.

When flames or ejected materials are released along the upper surface of the battery module 100 (bent upon the pack cover 230) (above the battery module 100 in FIG. 11, the arrow in FIG. 12), the shielding member 436 of the second shield 430 blocks the movement into the gap between the battery modules 100. Furthermore, by a double shield layer of the first cover member 432 of the cover portion 431, the movement of flames or ejected materials is blocked to the maximum extent.

Flames or ejected materials may be released to the front side of the battery module 100 (see the arrow at the front side of the battery module 100 in FIG. 11). In this case, the second cover member 433 on the side of the triggered battery module 100 (the right battery module 100 in FIG. 11) may block the release of flames. On the basis of the inter-busbar 300 of the left battery module 100, first, the first shield 410 shields the inter-busbar 300 from flames or ejected materials, and then the second cover member 433 shields the inter-busbar 300 from flames or ejected materials. As described above, the first shield 410 and the cover portion 431 prevents the flames or solid ejected materials released from the front side of any one battery module 100 from coming into contact with the inter-busbar 300 of the other battery module 100 located adjacent to the battery module 100 in the length direction.

According to this embodiment, because the inter-busbar 300 connecting the battery modules 100 may be completely shielded inside the pack case 200, it may be possible to prevent arcing or short circuiting on the outer surface of the inter-busbar 300 due to flames or high temperature impurities released into the pack case 200 when a thermal event occurs, reduce thermal energy accumulation and delay thermal propagation to the adjacent battery module 100.

Additionally, it may be possible to prevent the fire spread between the battery modules 100, thereby enhancing durability of the battery pack 10 and reducing the maintenance and repair cost. Additionally, with the simpler shield structure, it may be possible to prevent explosive fire spread in the battery module 100 due to an electrical short circuit and prevent structural collapse of the battery pack 10.

Although not shown, the battery pack 10 according to the present disclosure may further include various types of devices to control the charge/discharge of the battery modules 100, for example, a Battery Management System (BMS), a current sensor, a fuse, etc.

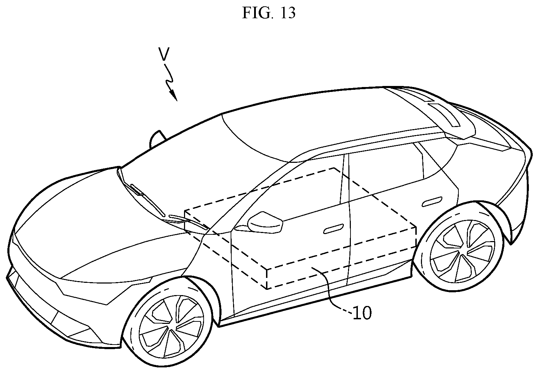

FIG. 13 is a diagram illustrating a vehicle according to an embodiment of the present disclosure.

Referring to FIG. 13, the battery pack 10 according to the present disclosure may be applied to the vehicle V such as an electric vehicle or a hybrid electric vehicle. That is, the vehicle V according to the present disclosure may include the battery pack 10 according to the present disclosure. The battery pack 10 may be installed at a car frame below the vehicle seat or a trunk space, and when installing in the vehicle, the battery pack 10 may be placed in the reverse order, if necessary.

According to these various embodiments, there may be provided the vehicle V including the battery pack 10 for preventing arcing or short circuiting due to the contact between the inter-busbar 300 and flames or high temperature impurities released into the pack case 200 when the thermal event occurs, reducing thermal energy accumulation, and delaying thermal propagation to the adjacent battery module 100.

The terms indicating directions such as upper, lower, left, right, front and rear are used for convenience of description, but it is obvious to those skilled in the art that the terms may change depending on the position of the stated element or an observer.

While the present disclosure has been hereinabove described with regard to a limited number of embodiments and drawings, the present disclosure is not limited thereto and it is apparent that a variety of changes and modifications may be made by those skilled in the art within the technical aspect of the present disclosure and the scope of the appended claims and their equivalents.

### [List of Reference Numerals]

| | | | |
|---|---|---|---|
| 10: | Battery pack | 100: | Battery module |
| 120: | Terminal | 200: | Pack case |
| 210: | Pack tray | 211: | Tray body |
| 212: | Partition | 230: | Pack cover |
| 300: | Inter-busbar | 310: | Fastening hole |
| 320: | Fastening bolt | 400: | Shielding unit |
| 410: | First shield | 411: | Fire resistant member |
| 420: | Accommodation case | 421: | Lower accommodation casing |
| 422: | Sidewall frame | 423: | Coupling hook |
| 424: | Support plate | 425: | Open surface |
| 426: | Upper accommodation cover | 427: | Coupling groove |
| 430: | Second shield | 431: | Cover portion |
| 432: | First cover member | 433: | Second cover member |
| 436: | Shielding member | | |

## Claims

1. A battery pack comprising:
a plurality of battery modules arranged along a width direction or a length direction;
a pack case accommodating the plurality of battery modules;
a plurality of inter-busbars electrically connecting two adjacent battery modules among the plurality of battery modules; and
a shielding unit configured to shield the inter-busbar from an internal space of the pack case,
wherein the shielding unit is disposed on an outer surface of the inter-busbar, between any one inter-busbar and another inter-busbar and between the internal space and the inter-busbar.

2. The battery pack according to claim 1, wherein the inter-busbar connects two battery modules located adjacent to each other in the width direction among the plurality of battery modules, and
wherein the shielding unit is extended in the width direction and disposed at a gap between the two battery modules located adjacent to each other in the length direction.

3. The battery pack according to claim 2, wherein the shielding unit blocks a top or side exposure of the inter-busbar to prevent flames or solid ejected materials produced in the internal space from coming into contact with the outer surface of the inter-busbar in case of a thermal event.

4. The battery pack according to claim 3, wherein the shielding unit includes:
a first shield disposed corresponding to the outer surface of the inter-busbar; and
a second shield configured to separate any one inter-busbar from another inter-busbar located adjacent to the inter-busbar in the length direction.

5. The battery pack according to claim 4, wherein the first shield includes:
a fire resistant member disposed in contact with the inter-busbar and surrounding a part of the inter-busbar; and
an accommodation case accommodating the inter-busbar.

6. The battery pack according to claim 5, wherein the fire resistant member includes a mica tape or a glass tape.

7. The battery pack according to claim 5, wherein the accommodation case is made of a heat resistant plastic material.

8. The battery pack according to claim 5, wherein the accommodation case includes:
a lower accommodation casing accommodating the inter-busbar; and
an upper accommodation cover disposed on the lower accommodation casing and coupled to the lower accommodation casing.

9. The battery pack according to claim 8, wherein the lower accommodation casing includes:
a sidewall frame having a height corresponding to a thickness of the inter-busbar; and
a support plate disposed on bottom of the sidewall frame, and configured to mount and support the inter-busbar at a center, and
wherein the support plate has an open surface on two sides.

10. The battery pack according to claim 9, wherein the sidewall frame has a coupling hook protruded upward to be coupled to the upper accommodation cover, and
wherein the upper accommodation cover has a coupling groove to which the coupling hook is detachably coupled.

11. The battery pack according to claim 4, wherein the second shield includes:
a cover portion attached to a part of the outer surface of the battery module and configured to cover the inter-busbar; and
a shielding member in contact with the cover portion and disposed on top of the two battery modules located adjacent to each other in the length direction to block the gap.

12. The battery pack according to claim 11, wherein the cover portion is bent to cover an edge of the battery module.

13. The battery pack according to claim 12, wherein the cover portion includes:
a first cover member configured to cover an upper surface of the inter-busbar; and
a second cover member disposed perpendicularly from the first cover member and configured to cover a side of the inter-busbar,
wherein a length and width of the first cover member is larger than a length and width of the inter-busbar in the length direction, and
wherein a length of the second cover member is equal to a length of the first cover member and a width of the second cover member is larger than a thickness of the inter-busbar.

14. The battery pack according to claim 13, wherein the shielding member is formed in a flat plate shape and disposed to connect upper surfaces of the two battery modules located adjacent to each other in the length direction.

15. The battery pack according to claim 11, wherein a length of the shielding member is larger than a length of the cover portion.

16. The battery pack according to claim 11, wherein the shielding member is continuously extended in the width direction of the battery module.

17. The battery pack according to claim 13, wherein a width of the shielding member is larger than a sum of a width of the first cover member disposed in the two battery modules located adjacent to each other in the length direction and the gap between the two battery modules located adjacent to each other in the length direction.

18. The battery pack according to claim 4, wherein the second shield is made of mica.

19. The battery pack according to claim 11, wherein the first shield and the cover portion prevent the flames or solid ejected materials released from a front side of any one battery module from coming into contact with the inter-busbar of another battery module located adjacent to the battery module in the length direction.

20. The battery pack according to claim 9, wherein the inter-busbar has a fastening hole for coupling with the battery module on two sides,
wherein a fastening bolt is disposed at the fastening hole, and
wherein the accommodation case shields an outer surface of the fastening bolt.

21. A vehicle comprising:
the battery pack according to any one of claims 1 to 20.
